# EUROPÄISCHE PATENTANMELDUNG

(11) **EP 3 978 649 A1**
(43) Veröffentlichungstag der Anmeldung: **06.04.2022**
(21) Anmeldenummer: 21198422.4
(22) Anmeldetag: 23.09.2021
(51) Int. Cl.: C23G 1/36, B01J 39/00, C01C 1/20, C01G 49/00

(54) **VERFAHREN ZUM ENTFERNEN VON ALKALIMETALL-IONEN AUS ANORGANISCHEN UND/ODER ORGANISCHEN SULFIDLÖSUNGEN**

(30) Priorität: 30.09.2020 DE 102020212341
(71) Anmelder: ThyssenKrupp Steel Europe AG, 47166 Duisburg (DE)
(72) Erfinder: Tebeck, Andreas, 47509 Rheurdt (DE)
(74) Vertreter: ThyssenKrupp Steel Europe AG

(57) **Zusammenfassung**

Die Erfindung betrifft ein Verfahren zum Entfernen von Alkalimetall-Ionen aus anorganischen und/oder organische Sulfidlösungen, durch Behandlung der Sulfidlösungen mit einem (modifizierten) schwach sauren Kationenaustauscherharz in Ammonium-Form und ferner ein Alkalimetall-Ionen-freies Schwermetallfällungsmittel, hergestellt mit dem erfindungsgemäßen Verfahren sowie die Verwendung des Schwermetallfällungsmittels.

## Beschreibung

Die Erfindung betrifft ein Verfahren zum Entfernen von Alkalimetall-Ionen aus anorganischen und/oder organische Sulfidlösungen, durch Behandlung der Sulfidlösungen mit einem (modifizierten) schwach sauren Kationenaustauscherharz in Ammonium-Form. Die Erfindung betrifft ferner ein Alkalimetall-lonen-freies Schwermetallfällungsmittel hergestellt mit dem erfindungsgemäßen Verfahren sowie die Verwendung des Schwermetallfällungsmittels.

Zur Reinigung von Abwässer oder zur Regeneration von Prozessbädern und jeweils Entfernung von Schwermetallen werden häufig Schwermetallfällungsmittel oder Ionenaustauscher eingesetzt. Diese liegen oft in Form von Alkali-Salzen vor, da Alkalimetalle im Vergleich zu Schwermetallen weniger toxisch und umweltschädlich wirken. Aus der DE000010254952A1 ist beispielsweise ein Verfahren zur Aufbereitung einer Zink-, Mangan- und Nickel-haltigen wässrigen Lösung, bestehend aus Phosphatierbadüberlauf und/oder aus Spülwasser nach der Phosphatierung bekannt, wobei der Phosphatierbadüberlauf und/oder das Spülwasser nach der Phosphatierung über schwach saure Ionenaustauscher geleitet wird, dessen Säuregruppen zu zumindest teilweise mit Alkalimetallionen neutralisiert sind. Für viele spätere Anwendungen, insbesondere bei der Herstellung von hochreinen Chemikalien muss allerdings eine Anreicherung von Alkalimetall vermieden werden. Aus der Analytik ist ferner bekannt, dass viele Schwermetalle als Sulfide aus Lösungen gefällt werden können (sogenannte Sulfid-Trennungsgänge: H2S- und Ammoniumsulfid- Trennungsgang). Allerdings ist hier der Umgang mit Schwefelwasserstoff notwendig; bzw. kann bei dem Arbeiten mit Sulfiden Schwefelwasserstoff gebildet werden. Dabei handelt es sich um ein äußerst giftiges Gas, das zur Schwefelwasserstoffvergiftung führen kann. Da Schwefelwasserstoff die Geruchsrezeptoren betäubt, wird eine Erhöhung der Konzentration nicht mehr über den Geruch wahrgenommen.

Aufgabe der vorliegenden Erfindung war es, ein Verfahren zur Verfügung zu stellen mit welchem Alkalimetall-freie Fällungsmittel hergestellt werden können. Das Verfahren sollte in einfachen, wenigen Schritten durchführbar sein und auf aus dem Stand der Technik bekannten Edukten und Mittel basieren. Damit könnten Fällungsmittel hergestellt werden, die nicht neu synthetisiert werden, sondern auf der Modifikation von bekannten Fällungsmittel basieren. Des Weiteren sollte das gesamte Verfahren als auch der Umgang mit den Fällungsmitteln die HSE-Anforderungen erfüllen und Gesundheit und Sicherheit der Mitarbeiter sowie Umweltschutz gewährleisten (HSE steht für Health Safety Environment; also Gesundheit, Sicherheit, Umwelt). Insbesondere sollte die Entstehung von toxischen Stoffen vermieden werden.

Die Aufgaben werden durch die Gegenstände der Ansprüche gelöst.

Die vorliegende Erfindung betrifft in einer ersten Ausführung ein Verfahren zum Entfernen von Alkalimetall-lonen aus anorganischen und/oder organische Sulfidlösungen, dadurch gekennzeichnet, dass die Sulfidlösungen enthaltend Alkalimetall-Ionen mit einem schwach sauren Kationenaustauscherharz in Ammonium-Form behandelt wird. D. h., die Sulfidlösungen wird mit dem Kationenaustauscher in Ammoniumform so in Kontakt gebracht, dass ein lonenaustausch möglich ist und stattfindet. Gegenstand der Erfindung ist mithin auch ein Verfahren zum Herstellen von Alkalimetall-freien Sulfidlösungen.

Eine weitere Ausführung ist dadurch gekennzeichnet, dass die Alkalimetall-Ionen ausgewählt sind aus der Gruppe enthaltend oder bestehend aus Li+, Na+, K+, Rb+ und Cs+; bevorzugt ausgewählt sind aus der Gruppe enthaltend oder bestehend aus Na+ und K+, besonders bevorzugt Na+.

Sulfide sind als Salze beziehungsweise Alkyl- oder Arylderivate des Schwefelwasserstoffs (H2S) bekannt. In einer Alternative werden im Sinne der Erfindung auch Verbindungen unter dem Begriff Sulfid subsumiert, die mindestens ein Schwefel-Atom mit mindestens einem freien Elektronenpaar aufweisen, wobei dieses freie Elektronenpaar zur Ausbildung einer chemischen Bindung mit Metallen, bevorzugt Ionen, insbesondere Schwermetallen zur Verfügung gestellt wird.

Im weitesten Sinne ist die chemische Bindung eine ionische Bindung, kovalente Bindung, koordinative Bindung oder schwache Bindung über elektrostatische Anziehung oder Van der Waals-Kräfte. Im Sinne der Erfindung beschreibt der Begriff "Schwermetall" ein Nicht-Eisen-Metall (NE-Metall) mit einer Dichte ≥ 5 g/cm³. Ein solches Schwermetall ist ausgewählt aus der Gruppe enthaltend oder bestehend aus Pb, Zn, Cr, Cd, Co, Cu, Mn, Mo, Ni, Nb, V, Sn, Bi und As; bevorzugt Ni, As, Cd, Pb, Cr, Cu und Sn.

In einer Ausführung werden als Sulfidlösungen anorganische und/oder organische Polysulfidlösungen eingesetzt. Polysulfide enthalten definitionsgemäß mindestens eine S-S-kovalente Bindung. In einer Alternative enthält ein Polysulfid aber auch mindestens 2 Schwefelatome mit jeweils mindestens einem freien Elektronenpaar aufweisen, wobei dieses freie Elektronenpaar zur Ausbildung einer chemischen Bindung mit Metallen, bevorzugt Ionen, insbesondere Schwermetallen zur Verfügung gestellt wird.

Eine Ausführung betrifft auch ein Sulfid das ein polymeres Grundmolekül mit funktionellen Schwefelverbindungen aufweist. In einer Alternative weist das polymere Grundmolekül eine langkettige Molekülstruktur auf, d. h. es weist eine Kette von mindestens 6, 8, 10, 12, bevorzugt mindestens 14, 16, besonders bevorzugt mindestens 18, insbesondere 20 oder mehr Atomen auf. In einer weiteren Alternative weist das polymere Grundmolekül eine Vielzahl funktioneller Schwefelverbindungen auf, mindestens 2, bevorzugt 4 oder 6, besonders bevorzugt 8, insbesondere 10 oder mehr funktionelle Schwefelverbindungen auf. Eine funktionelle Schwefelverbindung ist eine funktionelle Gruppe enthaltend ein Schwefelatom wie oben definiert.

Eine weitere Ausführung ist dadurch gekennzeichnet, dass das Sulfid der Sulfidlösungen ein polymeres Grundmolekül mit funktionellen Schwefel- und Stickstoffverbindungen aufweist. Auch hier weist das Sulfid in einer Alternative ein polymeres Grundmolekül mit einer Vielzahl von funktionellen Stickstoffverbindungen auf. Details zu dem Grundmolekül bzw. den Begriffen Vielzahl sind oben beschrieben. Eine funktionelle Stickstoffverbindung ist eine funktionelle Gruppe enthaltend mindestens ein Stickstoffatom, insbesondere ein Stickstoffatom mit einem freien Elektronenpaar das für eine chemische Bindung wie oben beschrieben zu einem Metall bzw. Kation zur Verfügung gestellt wird.

In einer Ausführung ist das Sulfid, dadurch gekennzeichnet, dass es durch chemische Bindung über mehrere Koordinationsstellen, bevorzugt 2, 4 oder 6 Koordinationsstellen, schwer lösliche Metallkomplexverbindungen ausbilden kann oder ausbildet. Deshalb weist das Sulfid oben genannte mehrere Koordinationsstellen für ein und dasselbe Schwermetallatom oder-ion auf.

Die Erfindung betrifft in einer Ausführung das oben beschriebene Verfahren wobei das Sulfid als Schwermetallfällungsmittel einsetzbar ist, d. h. das Sulfid bindet Schwermetalle über eine chemische Bindung wie oben beschrieben und fällt als Schwermetallsulfid aus, bevorzugt in wässriger Lösung.

Bei dem erfindungsgemäßen Verfahren werden in einer Ausführung die Alkalimetall-Ionen eines Sulfids gegen Ammonium-Ionen ausgetauscht.

Im erfindungsgemäßen Verfahren wird ein schwach saurer Kationenaustauscher in Ammonium-form mit einer Alkalimetall-Ionen enthaltenden Sulfidlösung eluiert.

Da die gängigen und handelsüblichen schwach sauren Kationenaustauscher Alkalimetall-Ionen, insbesondere Na+ Ionen als gegen Ionen aufweisen, ist in einem Vorschritt eine Beladung des Kationenaustauscherharzes mit Ammoniumionen notwendig. Hierzu erfolgt eine Konditionierung des Kationenaustauscherharzes mit einer NH40H-Lösung. Je nach eingesetztem Volumen kann dabei die Mono-Ammoniumform oder, bei größerer Volumenzugabe der NH40H-Lösung die Di-Ammoniumsform hergestellt werden. Im Einzelnen wird ein in Alkalimetall-Ion, insbesondere Na+-Form vorliegendes Kationenaustauscherharz in einem ersten Schritt mit einem Volumen, das den 2 bis dreifachen Bettvolumen darstellt, an 7,5 %iger Salzsäure regeneriert. Anschließend erfolgt eine Säureverdrängung mit Vollentionisiertem-Wasser (VE-Wasser) in der vierfachen Menge des Bettvolumens. Die Konditionierung erfolgt mit einer 4-%igen NH40H-Lösung. Wird eine Menge von 1-2 Bettvolumen der Ammoniumhydroxiden-Lösung eingesetzt, erhält man die Mono-Ammoniumform; bei Einsatz einer Menge von 2-3 Bettvolumen erhält man die Di-Ammoniumform. Daran schließt sich die Spülung des Kationenaustauscherharzes in der Ammoniumsform mit einer Menge entsprechend dem vierfachen Bettvolumen von VE-Wasser an. Der so modifizierte schwach saure Kationenaustauscher wird anschließend mit der Sulfidlösungen eluiert, um Alkalimetall-Ionen in der Sulfidlösungen durch Ammonium-Ionen zu ersetzen.

In einer Ausführung bleibt der pH-Wert während des Verfahrens konstant im alkalischen Bereich, bei Werten von 8-12, bevorzugt 9-12 oder 10-12. Dadurch wird vorteilhaft die Freisetzung von giftigem Schwefelwasserstoff vermieden. Des Weiteren wird durch das erfindungsgemäße Verfahren gewährleistet, dass sich in der Säule (des Kationenaustauschharzes) keine Verbindungen zersetzen.

In dem erfindungsgemäßen Verfahren wird ein Alkalimetall-ionenfreies Sulfid in Ammonium-Form hergestellt. Besonders bevorzugt wird als Sulfid ein Schwermetallfällungsmittel eingesetzt.

Gegenstand der vorliegenden Erfindung ist auch ein Alkalimetall-Ionen freies Sulfid in Ammonium-Form, bevorzugt ein Alkalimetall-Ionen freies Schwermetallfällungsmittel.

Das Entfernen von Alkalimetall-Ionen bedeutet im Sinne der Erfindung, das im wesentlichen alle Alkalimetall-Ionen entfernt werden, d. h in dem Produkt des erfindungsgemäßen Verfahrens kommen Alkalimetalle, bevorzugt Natrium gegebenenfalls lediglich als Verunreinigung vor. In einer Ausführung werden alle Alkalimetall-Ionen bis auf einen Massenanteil von maximal 0,005 %, 0,0025 %, bevorzugt 0,001 %, besonders bevorzugt 0,0005 % insbesondere 0,00025, 0,0001 oder weniger entfernt. Entsprechendes gilt für das Produkt.

Das Schwermetallfällungsmittel kann in seinen unterschiedlichen Ausführungen alle oben beschriebenen Merkmale des ursprünglich eingesetzten Sulfides einzeln oder in Kombination aufweisen.

Die Erfindung betrifft außerdem die Verwendung des Schwermetallfällungsmittels zum Entfernen von Schwermetallen ausgewählt aus der Gruppe enthaltend oder bestehend aus Pb, Zn, Cr, Cd, Co, Cu, Mo, Ni, Nb, V, Sn, Bi und As.

In einer Ausführung werden die Schwermetalle aus sauren Lösungen entfernt. In einer weiteren Ausführung werden die Schwermetalle aus gebrauchten Beizen der Stahlherstellung.

Das Schwermetallfällungsmittels wird in einer Ausführung zur Herstellung von Alkalimetall-Ionenfreien Eisen(III)oxid eingesetzt.

Dazu wird das Eisen(III)-oxid aus einer salzsauren eisenchloridhaltigen Lösung in einem Verfahren umfassend oder bestehend aus den Schritten:
i) Reduzieren der Konzentration der freien Säure in der salzsauren eisenchloridhaltigen Lösung durch Zugabe eines Metalls und/oder einer Metallegierung und gegebenenfalls Einstellen des pH-Wertes;
ii) Abscheiden von Schwermetallen durch elektrolytische Zementation und gegebenenfalls Einstellen des pH-Wertes;
iii) Ausfällen von Schwermetall-Komponenten und/oder gegebenenfalls Si-Komponenten mittel mindestens eines Flockungsmittels und gegebenenfalls Einstellen des pH-Wertes;
iv) Zugabe von organischen und/oder anorganischen Verbindungen die funktionellen Gruppen enthaltend Schwefel aufweisen und Ausfällen von Ni-Komponenten;
v) Abfiltrieren der Dispersion;
vi) thermische Zersetzung des Filtrats enthaltend oder bestehend aus einer Eisenchloridlösung zu Eisen(III)-oxid und Chlorwasserstoff hergestellt.

In Schritt i) kann als Metall Eisen und/oder mindestens eine Eisen-haltige Legierung, bevorzugt Stahl, insbesondere Stahlschrott eingesetzt werden.

In Schritt i) und/oder ii) wird ein pH-Wert von 1,5 bis 3,0, bevorzugt 1,5 bis 2,5 eingestellt, bevorzugt nur mittels Zugabe eines Metalls und/oder einer Metallegierung.

In Schritt ii) werden Schwermetalle ausgewählt aus der Gruppe enthaltend oder bestehend aus Pb, Zn, Cr, Cd, Co, Cu, Mn, Mo, Ni, Nb, V, Sn, Bi und As sowie Metalle edler als Eisen durch elektrolytische Zementation abgeschieden, bevorzugt Edelmetalle, Cu, Co, Zn, As, Pb und/oder Bi.

In Schritt iii) werden Schwermetalle ausgewählt aus der Gruppe enthaltend oder bestehend aus Ni-, Cr-, Cu-, Ni-, Pb- und Zn-, sowie gegebenenfalls Si-Komponenten mittels Flockungsmittel ausgefällt. In Schritt iii) und/oder iv) wird ein pH-Wert von 2,5 bis 5,5 eingestellt, bevorzugt 3,5 bis 4,5, bevorzugt mit einer (NH4)OH-Lösung.

In Schritt iv) werden die nach Schritt iii) noch in Lösung verbleibenden Ni-Ionen mittels organischen und/oder anorganischen Alkalimetall-Ionen freien Sulfidlösungen - die Produkte des erfindungsgemäßen Verfahrens, wie oben beschrieben - ausgefällt. In dem weiteren Schritt v) wird die Dispersion nach Schritt iv) filtriert. Das erhaltene Filtrat besteht im Wesentlichen aus einer FeCl2-Lösung. Zur Herstellung des Eisen(III)oxids wird das oben beschriebene Filtrat einer Pyrolyse unterworfen, Diese in einem Sprühröster oder in einem Wirbelschichtröster, auch Fließbettverfahren genannt, durchgeführt. Bevorzugt wird ein Sprühröster verwendet. Dabei wird das Filtrat in einem Sprührostofen bei mindestens 600 °C und bei maximal 700 °C thermisch zersetzt.

Dabei wird ein im Wesentlichen Ni-freies und Alkalimetall-freies, insbesondere Na-freies Eisen(III)oxid hergestellt. In diesem Zusammenhang bedeutet der Begriff "ein im Wesentlichen Ni-Komponenten-freies Eisen(III)oxid", dass der Massenanteil an Ni-Komponenten, insbesondere NiO, maximal 0,05 %, 0,025 %, 0,2 %, bevorzugt 0,015 %, 0,0125 %, 0,01 %, besonders bevorzugt 0,009 %, 0,008 %, 0,007 %, 0,006 %, 0,005 %, 0,004 %, 0,003 %, 0,002 %, 0,001 %, insbesondere 0,0008 %, 0,0007 %, 0,0006 %, 0,0005 %, 0,0004 %, 0,0003 %, 0,0002 %, oder 0,0001 % im Eisen(III)oxid beträgt. In diesem Zusammenhang bedeutet der Begriff "ein im Wesentlichen Alkalimetall-freies, insbesondere Na-freies Eisen(III)oxid", dass der Massenanteil an Alkalimetall, insbesondere Na, maximal 0,05 %, 0,025 %, 0,2 %, bevorzugt 0,015 %, 0,0125 %, 0,01 %, besonders bevorzugt 0,009 %, 0,008 %, 0,007 %, insbesondere 0,006 %, 0,005 %, 0,004 im Eisen(III)oxid beträgt. In einer Alternative wird ein high-purity Fe203hergestellt, in einer Reinheit von mindestens 99,5 % Fe203, bevorzugt in einer Reinheitvon mindestens 99,6 %, 99,7 %, besonders bevorzugt 99,8 % oder mehr, der Rest sind unvermeidbare Verunreinigungen.

Die Bestimmung der Konzentration erfolgt mit dem Fachmann bekannten chemischen Analysemethoden, insbesondere mittels ICP-OES (Optischer Emissions-Spektrometer mit induktiv gekoppeltem Plasma, Gerät Arcos von Firma Spectro).

Im Sinne der Erfindung können auch Kombinationen der oben beschriebenen Ausführungen und Alternativen eingesetzt werden.

### Beispiele:

### Beispiel 1. Konditionierung eines schwach sauren Kationenaustauschers

Als Kationenaustauscher wurde Lewatit TP 207 eingesetzt. Das Harz wurde in der Na+-Form geliefert.

| | | |
|---|---|---|
| i) | Schritt | |
| | Regeneration mit 7,5 % Salzsäure | Menge 2 bis 3 Bettvolumen |
| | | |
| ii) | Schritt | |
| | Säureverdrängung mit VE-Wasser | Menge 4 Bettvolumen |
| | | |
| iii) | Schritt | |
| | Konditionierung mit 4 % NH40H-Lösung | Menge 1 bis 2 Bettvolumen bei Mono-Form |
| | | Menge 2 bis 3 Bettvolumen bei Di-Form |
| | | |
| iv) | Schritt | |
| | Spülen mit VE-Wasser | Menge 4 Bettvolumen |
| | | |
| v) | Schritt | |
| | Eluieren mit Sulfid-Lösung. | |

Als Sulfid-Lösung wurde in diesem Beispiel eine Lösung HydroMet (dabei handelt es sich um Produkt HydroMet Alpha^{®}-SL der Firma Färber und Schmid AG, Dietikon, Schweiz) eingesetzt.

### Beispiel 2. Verwendung der Na- freien Sulfid-Lösung (Eluat von Beispiel 1) als Fällungsmittel für Nickel.

In diesem Beispiel wurde Eisen (III) Oxid wie oben beschrieben hergestellt. Dabei wurde in Schritt iv) zum Entfernen von Ni das Eluat (wobei das Eluat des käuflich erworbenen Produkts in 2% Massenanteil eingesetzt wurde) aus Beispiel 1 verwendet. Als Vergleich wurde eine Lösung HydroMet in der gleichen Konzentration eingesetzt, wobei dieses nicht mit dem erfindungsgemäßen Verfahren in eine Ammoniumform überführt wurde. Die Konzentration der Metalle wird als Massen-% in Bezug auf Fe203 angegeben.

| | HydroMet | | | Eluat | |
|---|---|---|---|---|---|
| Fällungsmittel [I/m3] | Na | Ni | | Na | Ni |
| 0 | 0,0039 | 0,0122 | | | |
| 2 | 0,0118 | 0,0104 | | 0,0038 | 1,018 |
| 10 | 0,0473 | 0,0043 | | 0,0037 | 0,0038 |
| 20 | 0,0840 | 0,0003 | | 0,0039 | 0,0001 |

Aus den Ergebnissen wird deutlich, dass durch das nicht erfindungsgemäße hergestellte Fällungsmittel (HydroMet, Natriumsform) Natrium in Eisen(III)oxid eingetragen wird. Mit der erfindungsgemäßen Ammoniumform des Fällungsmittels (Eluat) bleibt Massenanteil Natrium konstant. Das bedeutet, Natrium konnte vollständig aus dem Fällungsmittel HydroMet mit dem erfindungsgemäßen Verfahren entfernt werden. Des Weiteren belegen die Ergebnisse, dass Nickel-freies Eisen(III)oxid hergestellt wurde.

## Patentansprüche

1. Verfahren zum Entfernen von Alkalimetall-Ionen aus anorganischen und/oder organische Sulfidlösungen, **dadurch gekennzeichnet, dass** die Sulfidlösungen enthaltend Alkalimetall-Ionen mit einem schwach sauren Kationenaustauscherharz in Ammonium-Form behandelt wird.

2. Verfahren nach Anspruch 1, **dadurch gekennzeichnet, dass** die Alkalimetall-Ionen ausgewählt sind aus der Gruppe enthaltend oder bestehend aus Li+, Na+, K+, Rb+ und Cs+.

3. Verfahren nach einem der vorangehenden Ansprüche, **dadurch gekennzeichnet, dass** die Alkalimetall-Ionen ausgewählt sind aus der Gruppe enthaltend oder bestehend aus Na+ und K+, bevorzugt Na+.

4. Verfahren nach einem der vorangehenden Ansprüche, **dadurch gekennzeichnet, dass** als Sulfidlösungen anorganische und/oder organische Polysulfidlösungen eingesetzt werden.

5. Verfahren nach einem der vorangehenden Ansprüche, **dadurch gekennzeichnet, dass** das Sulfid der Sulfidlösungen ein polymeres Grundmolekül mit funktionellen Schwefelverbindungen aufweist.

6. Verfahren nach einem der vorangehenden Ansprüche, **dadurch gekennzeichnet, dass** das Sulfid der Sulfidlösungen ein polymeres Grundmolekül mit funktionellen Schwefel- und Stickstoffverbindungen aufweist.

7. Verfahren nach einem der vorangehenden Ansprüche, **dadurch gekennzeichnet, dass** das Sulfid der Sulfidlösungen mehrere Koordinationsstellen für ein Schwermetallatom oder - ion, bevorzugt 2, 4 oder 6 Koordinationsstellen aufweist.

8. Verfahren nach einem der vorangehenden Ansprüche, **dadurch gekennzeichnet, dass** das Sulfid als Schwermetallfällungsmittels einsetzbar ist.

9. Verfahren nach einem der vorangehenden Ansprüche, **dadurch gekennzeichnet, dass** die Alkalimetall-Ionen gegen Ammonium-Ionen ausgetauscht werden.

10. Verfahren nach einem der vorangehenden Ansprüche **dadurch gekennzeichnet, dass** der pH-Wert während des Verfahrens konstant bleibt.

11. Alkalimetall-lonen-freies Schwermetallfällungsmittel in Ammonium-Form hergestellt in einer Verfahren nach einem der Ansprüche 1-9.

12. Verwendung des Schwermetallfällungsmittels nach Anspruch 11 zum Entfernen von Schwermetallen ausgewählt aus der Gruppe enthaltend oder bestehend aus Pb, Zn, Cr, Cd, Co, Cu, Mo, Ni, Nb, V, Sn, Bi und As.

13. Verwendung des Schwermetallfällungsmittels nach Anspruch 11 zum Entfernen von Schwermetallen aus sauren Lösungen.

14. Verwendung des Schwermetallfällungsmittels nach Anspruch 11 zum Entfernen von Schwermetallen aus gebrauchten Beizen der Stahlherstellung.

15. Verwendung des Schwermetallfällungsmittels nach Anspruch 11 zur Herstellung von Alkalimetall-Ionen-freien Eisen(III)oxid.
